# EUROPEAN PATENT SPECIFICATION

(11) **EP 3 116 768 B1**
(45) Date of publication and mention of the grant of the patent: **09.02.2022**
(21) Application number: 14843197.6
(22) Date of filing: 23.12.2014
(51) Int. Cl.: B62D 49/06, B62D 21/02, B62D 21/18, B62D 33/063, B60B 35/10, A01B 79/00

(54) **TRACTOR WITH DYNAMICALLY VARIABLE TRACK WIDTH**
ARBEITSTRAKTOR MIT DYNAMISCH VERÄNDERBARER SPURBREITE
TRACTEUR AVEC LARGEUR DE VOIE À VARIATION DYNAMIQUE

(30) Priority: 20.12.2013 NL 1040560
(43) Date of publication of application: 18.01.2017
(73) Proprietor: H2Trac B.V., 3404 NW Ijsselstein (NL)
(72) Inventor: VAN HAM, Paulus, Wilhelmus, Maria, NL-6706 BW Wageningen (NL)
(86) International application number: PCT/EP2014/003465
(87) International publication number: WO 2015/090618

(56) References cited:
- EP-A1- 2 058 154
- FR-A1- 2 854 121
- US-A- 4 611 683

## Description

### BACKGROUND OF THE INVENTION

### 1. Field of the Invention

The present invention relates to tractors in general, in particular as may be useful for agricultural application in soil cultivation, more in particular as described in the study "Electromotor Almobiel", by Ryan van Dommelen of 2012. This study describes a so called portal type of tractor, fitted with a standard hitch, implying that it should be capable of soil cultivating operations. Portal tractors are know in general, however typically for crop cultivating operations, e.g. as in EP2058154 and in FR2854121. The tractor as known from the "Almobiel"-study, furthermore is provided with wheels driven by an electric motor, the wheels thereto provided with a planetary reduction gear, and the tractor provided with a diesel engine for driving a generator feeding a battery pack for sourcing the electric motor. The known tractor furthermore is designed with space provided in between the front and rear pair of wheels, for incorporating general agricultural equipment including soil cultivating equipment, as may also be known from the brochure on the "Mastertrack verdura" tractor, known since nov. 30, 2010, from "www.rath-maschinen.com". The front and rear pair of wheels in the known "Almobiel" tractor are mutually connected by a longitudinally extending girder, corresponding to the girder and method of connection as known from "Mastertrac Verdura". The known Almobieltractor is provided with a operator cabin arranged to the rear of the equipment space so as to have "work in sight" in a manner corresponding to what is known from "Mastertrack Verdura". The Almobiel furthermore sets forth a concept of electrically driven wheels, with the electric motors actively cooled by a cooling system guiding cooling fluid along at least part of the housing of the electric motor, and mentions the feasibility of optimally using portal tractors by driving the same along cultivation beds or over cultivation tracks in a field, using a GPS positioning system. The publication on the "Electromotor Almobiel" being a feasibility study, hence theoretic proposal, many issues as are required for powerful and versatile practical operation of this novel concept for a tractor remain un-answered or unpractical, the present invention thereto providing and useful practical alternatives as defined in the following.

A tractor as presently designed and presented sets forth a number of novel and independently applicable concepts in design and use of such tractors. One such concept is directed to having the drive and support means of the tractor outside a crop bed to be treated, hence outside tool width. Another novel concept within the present invention relates to a tractor design for having the tools in sight when driving for treating the crop or crop bed. A third concept relates to a design for electric drive of a tractor, while a fourth concept relates to a manner of steering the tractor while treating the crop or the crop bed.It may be recognized in conventional tractors that in many cases the agricultural equipment is included either to the rear or to the front end of the tractor, in either of which cases proper inspection, in fact user control of the treatment process is unfavorable. One way of obviating this advantage, in which the present invention provides improvement, is to have the treatment equipment directly in front of the tractor driver. Where such tractor design are known, these tend to be specific or dedicated designs with limited space for tools . The present invention provides to implement this "work in sight" concept in an at least more universal manner.

Another disadvantage in conventional agricultural tractors is that in many cases the wheels pass over treated bed, thereby disadvantageously causing local compacting of the soil and/or crop damage. Where it is known to overcome this type of disadvantage in conventional tractor design by adaptation means, technology in general, directed to modifying track width, these technologies are generally limited in the extend of adaptation of tract width and/or not particularly versatile in use and/or operation of the tractor. Such tractors come with front and or rear axels that may be adapted in width, using various forms of track width adapting tools including e.g. telescopic systems at which an inner and outer shaft may be brought in mutually fixed position after adaptation to track width. Moreover, very often such width adapting systems are limited in the extent to which the width may be adapted since they are used for adapting to crop rows, i.e. positioning the wheels aside thereof, rather than aside cultivation beds, i.e. beyond tool width. The present invention provides to implement a concept for "track width adaptation" in a versatile, i.e. easily practicable manner, and/or for relatively very large adaptations of track width.

The present invention also relates to a novel concept and system for implementing tractor drive. Where conventional tractor drive departs from a compact and integrated structure of combustion engine, transmission, rear wheel drive in the form of a so called "rear wheel drive bridge", and often also of the driver seat and cabin, the present invention proposes a novel concept in which the wheels, preferably all four wheels are driven by electric motors, the tractor thereto comprising an electric generator driven, by a power source such as a conventional combustion engine and other type of engine or power supply such as an H₂-motor, and powering the electric motors via flexible electric leads. The novel concept thereby provides for optimal distribution of weight and drive power, as well as increased possibilities for mounting tools, machines and accessories.

The present invention further relates to a novel concept of guiding an at least three wheel tractor during cultivation, using GPS navigation known per se, for optimal guidance of the tractor, in particular the crop or soil cultivation equipment carried thereby. The novel concept requires all wheels of the tractor to be implemented steerable, and prescribes an adaptation of the manner of steering during, i.e. a different steering mode, in particular for use during cultivation, in which all wheels will be oriented in the same direction as a manner of steering. With this novel feature of a special, in particular automatically and/or manually selectable steering mode, crop tracks may be followed with more accurate and/or swifter effect of steering. The latter is e.g. in particular of importance in crop cultivation where no chemical treatment is desired, so that each cm2 of weeds not treated by the cultivation tool effects considerable amount of costs and/or effort in manual after-treatment thereof.

Apart from the preceding described conceptual implementations, the presently proposed new tractor design brings about various other aspects related to utility vehicles, tractors and agricultural tractors in particular, either in the form of elaborations on the concepts or preferred embodiments, thereof, or in the form of further independently applicable inventive design aspects. and particularly, related to the afore mentioned fixed track cultivation. Such may e.g. include an enhanced manner of coupling cultivation tools to the tractor, a concept of dynamic movement of location of tractor cabin for enhanced and versatile utilization of the tractor and/or the utilization of driving movement of the tractor for adapting track width, as may become evident from the following description and figures. Such dynamic positioning of cabin is in a conventional tractor type, known per se from GB2361673.

### 2. Description of the Related Art

As to varying track width, known tractors may be provided with a telescopically extendable wheel support, in which an inner wheel supporting tube may be shifted outwards manually relative to a common outer tube connected to the frame of a tractor. The relative position of inner and outer tube is fixed by using a pin or bolt and hole mechanism. Adaptations of track width are also known to be made using so called distance members, e.g. an annular ring between wheels or between wheel and support. The known systems are generally limited to small changes in the width that they may be adapted to. Hence, they are generally not suited for used in a so called fixed path crop growing method, in which the amount of soil not subjected to compression by tractor wheels is to be maximized relative to the track width needed for passing tractor wheels. It is in this respect also known to have tractors with very wide wheel base, either fixed or adaptable around such wide wheel basis. Such tractor are generally dedicated to such fixed track crop growing methods, and have for a disadvantage that they may not or not easily and often not without special permit pass over public road. Such wide based tractors are hence limited in applicability, at least are not very versatile or easily displaceable, and hence are relatively expensive. It is an object of the present invention to overcome such problems, and to arrive at a versatile, economically, at least more generally useable wide base tractor, preferably still being capable of being driven over public roads.

### BRIEF SUMMARY OF THE INVENTION

In the present invention, as defined by the appended independent claim 1, a solution is presented towards a tractor that is provided with wide wheel basis, while also adaptable to relatively narrow wheel basis, as e.g. needed for public roads. A tractor according to the present invention thereto may be described as a tractor with a plurality of wheels, provided with adaptation means for adapting the lateral position of a wheel relative to a transverse centre of the tractor, such wheel suspended from a frame of the tractor by a laterally extendable wheel support system, the support system thereto comprising a fixed part fixed to the frame, and a moveable part connected to a wheel and telescopically moveable relative to said fixed part, wherein each wheel is provided with a separate support system, the support systems of laterally opposite wheels being included incorporated one behind the other as taken in longitudinal direction of the frame. By means of such a measure the telescopic extension of the wheel support may be relatively large, in that such support may extend up to the opposite side of the tractor frame with respect to the wheel to be supported.

In an unclaimed independent aspect the invention may include a tractor design having the work "in sight" of the driver, in that the tractor design allows for equipment to be included in a versatile manner in a central part of the tractor defined by a front section and a rear section, each one accommodating a pair of wheels and a drive part, a frame extending in between the sections at a very high level, such that many custom type of tools may be included, thereby preferably having available a standardized hitch a the rear side of the front tractor section, so as to actually allow exchange of equipment as adapted for conventional tractors and tractor hitches.

In an unclaimed independent aspect, the invention may comprise the division of the drive in a engine driving an electric generator coupled to an electric motor included in a wheel support, preferably at all wheels, and preferably by electrical connection and drive via a battery pack, more in particular thereby having taking measures to allow application of standard industrially applicable motors, adapted for use in this application in at least having provided an actively cooled housing.

In an unclaimed independent aspect, the invention may include a method and the implementation thereof in a vehicle, in particular tractor adapted thereto, in which steering of a four wheel steerable vehicle comprises selecting one of at least two steering modes related to different manners of steering the wheels.

### BRIEF DESCRIPTION OF THE DRAWINGS

FIG. 1A to 1D represent the concept of a tractor in accordance with the present invention, Fig. 1A providing a first perspective view, Figure 1B providing a side elevation, figure 1C being a top view, and Fig. 1D providing a perspective view of an alternative and actual design;
FIG. 2A and 2B provide a top view of a telescopic wheel support system, in particular for such novel tractor concept, in accordance with the invention, in a retracted and extended position respectively, whereas Fig. 2C provides a perspective view of Fig. 2A;
FIG. 3 is a perspective view of a wheel support with integrated electric drive and power steering;
FIG. 4A and ∼4B provide a side elevation of the invented tractor, having it's cabin slid in a rearmost and central position respectively;
FIG. 5A and ~5B provide a perspective view and a cross section respectively of a main tractor frame part;
FIG. 6 provides a detail view of the movability construction to be moved along the part of figure 5;
FIG. 7 schematically illustrates the difference between conventional steering and dog style four wheel steering at reentering track, with an improvement in effect of timing or position of full entry into a desired track of the tractor;
FIG. 8 provides an illustration of a manner of re-adapting track or wheel width, which is in accordance with the invention performed while driving;
FIG. 9 is a schematic representation of the drive of the generator unit, actually consisting of two generators, as well of the mechanical drive to two PTO shafts for the hitches 6F and 6M at the front section of the tractor, via a take off from a generator drive shaft, the rear section PTO being driven by an electric motor.

### DESCRIPTION OF ILLUSTRATIVE EMBODIMENTS

By way of exemplifying a typical embodiment of various aspects of the present inventions, embodiments will described along the following schematical representations.

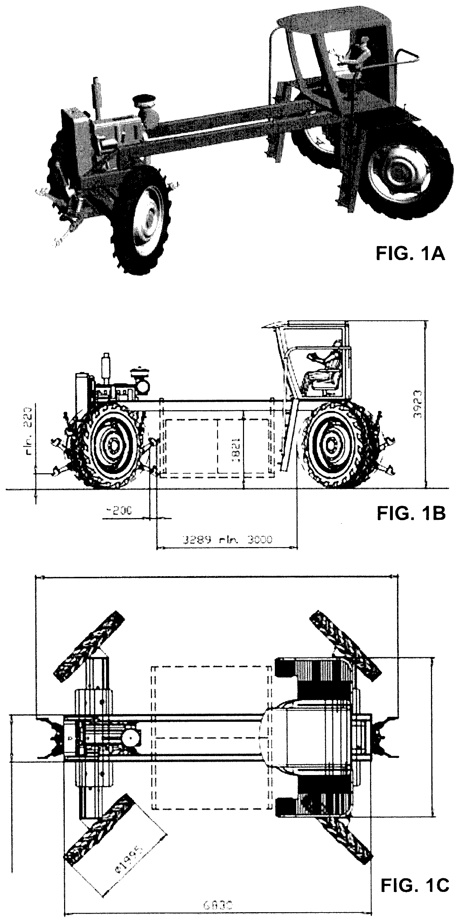

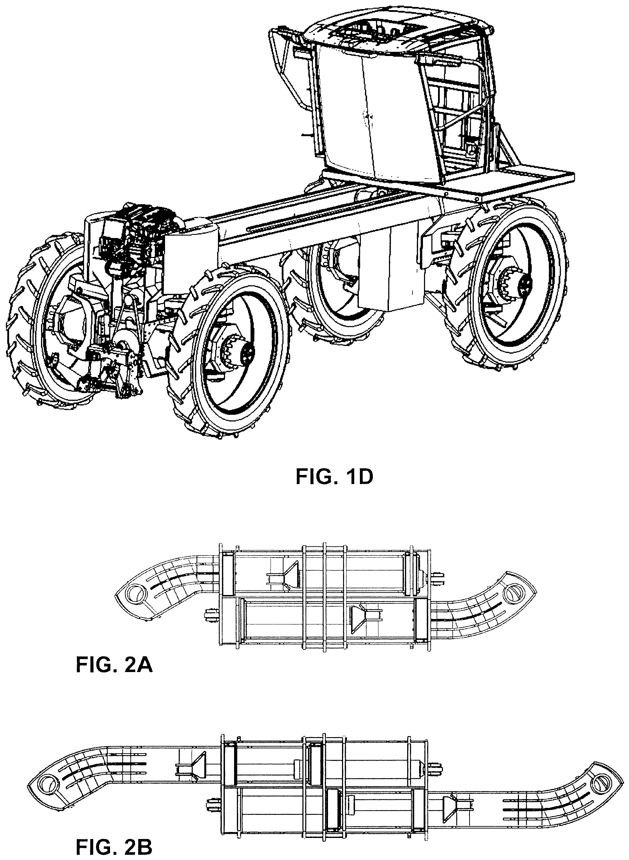

FIG. 1 illustrates a tractor design 1 as conceived by the present invention, with a central space within the tractor span for accommodating tools for preparing or treating soil. The tractor is designed with four very large wheels 2 and a front and a rear part, each carrying a part and corresponding weight of the tractor. The new tractor is, compared to conventional tractor designs as it were, cut over it's longitudinal half, hence has a front and a rear tractor section connected via a frame 3 situated at or above wheel top level. Hence, the present tractor is provided with a third or mid hitch for carrying tools in a tool section or space 7 which is spanned by the frame 3. The tractor frame 3 comprises two longitudinal girders, over which a tractor cabin 5 may move back and forth. As per figures one, it will normally be included in a rearmost position, so as to have a good sight on the crop or bed to be treated by the tractor and tractor tool. A front tractor section comprises a power source 4, composed of an engine such as a combustion engine, and an electricity generator. The tractor is provided with hitches 6 for carrying crop and soil handling or processing equipment with, in addition to a standard front hitch 6F and a rear hitch 6R, provided with a middle hitch 6M, alternatively denoted front rear hitch 6M, connected to a front section of the tractor and facing rearward for carrying equipment in a central equipment central defined said tractor sections, the frame and to soil with or without crop to be passed over.

Figure 1B illustrates such central equipment space with the accommodation of an imaginary tool or equipment 8, carried by said middle hitch. Figure 1B futher illustrates that such centrally coupled equipment, in contrast to conventional equipment lifting, be carried and lifted via a connector 9 included rearwards from the lower arms of the middle hitch 6M, in the depicted case fully to the rear of the equipment 8. The connector 9 connects to the frame 3, may be included longitudinally displaceable and may comprise an actuator operatively connected with an actuator for the lower arms of the middle hitch 6M. Fig. 1B further illustrates the free line of sight that the operator of the tractor may have with it's centrally include equipment 8, e.g. in case of cultivating for removal of weeds, with the cabin 5 included over the rear section of the tractor. As will be made clear further on, the cabin 5 is included moveable over the frame 5, so as to be able to position the cabin in such a forward located manner, e.g. right next to the power source 4, that the tractor may comply with visibility prescriptions as to view on public roads. The frame 5 is for the purpose of maximizing free sight towards the centrally included equipment, in particular the soil facing end thereof, at least in the section longitudinally in between the wheels embodied with two longitudinally extending girders, without central reinforcement connections of or other frame parts. Also to this end, the girders are shaped to have a skewed trapezoidal cross section, coinciding with a diverging line of sight from a, preferably rearmost cabin and driver position. So as to cope with torsion, the wheels of a rear or front pair are included via a connecting bridge which is included tiltable relative to the frame 3, in the present case via a longitudinally included central shaft.

FIG. 1C illustrates in a top view the steerability of the tractor according to the invention. It also indicates at the front tractor section a bridge 10, supporting a pair of wheels, in a manner in which the width wise wheel base of a pair may be extended. A bridge is thereto embodied telescopically, with a non-moving part 10A, and a therein telescopically moveable part 10B, the outer end of which supports a wheel 2. In this representation, the front bridge is represented with extended wheel base, whereas a nonvisible rear bridge is in a condition with widthwise retracted wheel base. Fig. 1C further indicates a wheel to be connected to a bridge via a support part 11 thereof, in an articulated manner via a predominantly vertically extending axis of articulation.

All four wheels are in a standard steering mode included steerable, in particular with the front and rear wheels not only in a manner as depicted for coping with corners. The tractor according to the present invention is however provided with further steering modes, one of which involving a program for optimal tracking, and involves the rear or front wheels to be steered in the same direction as the other pair of wheels for at least part of a steering action as may be explained later. Yet another steering mode or program includes steering the a wheels per side in a direction differing from the direction of the laterally opposite wheel, so as to allow an extendible wheel bridge to be extended while driving, thereby supporting extension via outward and forward steered of the wheel connected to the bridge side to be extended. Incidentally, the lateral position of both laterally opposite wheel, or even of all four wheels may be extended simultaneously in such steering mode, in fact wheelbase changing action. The tractor according to the invention may in this respect include steering programs both for wheel base extension and for wheelbase reduction while driving. Further mode's, whether or not included in a program for effecting wheel base change, may be included differentiation for realizing such wheel base changing in a rearwards driving mode.

FIG. 1D provides a perspective view of a further elaboration of the tractor according to the invention as per figure 1, showing a battery pack 12, included at the rear section of the tractor, in particular centrally to and below the upper side of the frame 3. The front section further includes fuel tanks 13, included between the front wheels, preferably located partly above the bride 10, and more preferably as to height level also at least partly overlapping with the wheel height. The tanks 13 are shaped rounded at their side facing a wheel, thereby enabling a smallest possible track width of the wheels, in conjunction with optimal allocation of space and localization of weight. The power unit 4, in this case is provided with a conventional fuel combustion engine and drives an electric generator 14. The latter drives electric motors 15 included in the suspension 11 of the wheels 2, in the present and preferred case via battery pack 12 via appropriate cabling not indicated in the drawing or comparable electric connection.

The configuration of the tractor in this manner, i.e. with a generator unit and fuel tanks at the front section, and cabin and battery pack at the rear section of the tractor, and having the frame in between, allows for a neatly distributed weight, in which all four wheels can be optimally driven, particularly by the electric motor at each of each of the four wheels. It is remarked that the inclusion of the motors in the wheel supports adds to this neatly distributed weight.

With the engine driving the generator unit, the engine may be driven at least most of the time in a steady and state, and certainly in an optimum regime, thus optimizing clean and economic operation thereof. In this respect, in contrast to conventional tractor engines, which operated in a low as possible rotational regime, the present engine is made a fast running diesel engine, as typically suited for automotive, i.e. for passenger car application. In this manner the rotational speed at which optimal torque condition of the engine is reached can be easily matched to the optimal speed regime of the electric generators. Moreover, when operating the engine at this, what may also be denoted lower rotational speed range end with maximum torque delivery, there will in all cases be left sufficient spare power, should such be desired during certain operating conditions.

Particularly effective in this economic manner of operating a power source is the feeding of the electric, i.e. wheel motors, via a battery bank 12, which in fact acts as a buffer to instant demands for increased driving power by the wheel motors.

In Fig. 1D, a wheel drive 15 may be noticed via an outward of the rim of a wheel 2 incorporated transmission unit, in this case a reducing planetary transmission, of which the driven outer side is embodied closed, in the form of pot connected to the wheel rim. The use of such redactor enable a fast operation, i.e. in an efficient speed regime of the motors, while the inclusion at the outside of the wheel rim enables practical applicability a standard, hence economic electric drive motor. Another measure promoting the efficiency, economics and useability of the electric drive system is the reduction of weight of the motors and generators by providing these in an actively cooled manner, i.e. with a dedicated outer housing containing loops for passing cooling liquid. In this manner the electric motor and generator may is kept cool, so that it operates even more efficiently. Each of these measures promotes the use of standard hence economic motors for drive and for electric generation. Another measure promoting fairly easy use of a standard motor is the reduction of length thereof by bending longitudinal end parts of the electrical motor part radially inward, so that a shorter housing may be used and so that an otherwise standard industrial electric motor may be applied in the space of the wheel, i.e. at the inner side of it's rim, and in the space of the suspension of the wheels, in particular in the articulated part thereof.

FIG. 2A and FIG. 2B illustrate the from a bottom view, a wheel bridge as depicted in retracted and extended form respectively. Each of the wheels has it's own extendable support, and is in longitudinal direction included in front of or else behind the other, so as to maximize length of the telescopically extendable part 10B of the support while maintaining a robust support thereof within the non-moving part 10A. Though strictly not necessary, a wheel support, i.e. it's end section is bent in longitudinal direction of the tractor, to an extend that it may still be aligned with the wheel support at the other lateral side of the tractor section. A support is made telescopically extendible by the inclusion of an actuator, e.g. of hydraulic or electrical type, within the support, the latter thereto largely embodied as a hollow girder. The actuator 16 is thereto at it's one end 16F attached to the non-moving part 10A of the support, and with it's other end 16M to the telescopically moveable part 10B.

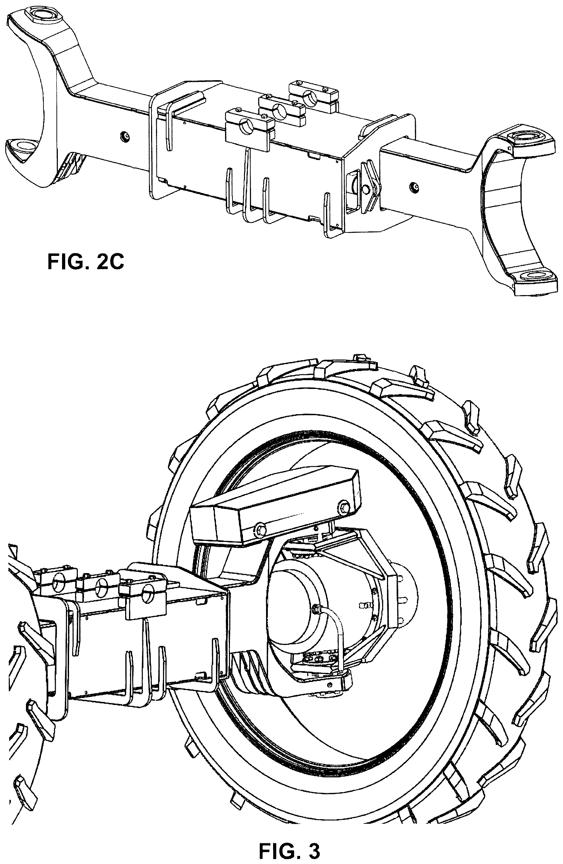

As may be best taken from FIG. 2C, a support 10A, 10B is further provided with a bifurcated end section 10E, in which an opening 10F for receiving an articulation shaft is included. The bifurcated part may in principle also be embodied with only one of two bifurcation forks 10G now supporting a wheel. Such fork may or may not be raised so as to create space for accommodating an electric drive motor, and is preferably provided with reinforcing ribs, represented by the lines as drawn in end section 10E.

Preferably the two supports are included as a unit, i.e. with a single and even common outer casing 101. In the depicted embodiment, the extendible part may be shifted outward until halfway the length of the telescopic holding part, as may be best taken from figure 2B . An end section part of such holding part, i.e. facing the wheel to be displaced, is provided with synthetic gliding blocks so as to support ease of movement of the moveable support part in the telescopic holder. Such gliding block is preferably also applied to the end of the moveable support part moving in the holding part. Transverse extension or retraction of the wheel base may further be supported by a special steering mode or program, in which one or both of the wheels of a front and/or a rear section of the tractor is steered away from longitudinal direction while the tractor is set into motion. In this manner track base may be installed relatively easily during drive of the tractor.

Figure 2C furthermore illustrates,not only re-enforcing ribs for the common holder casing 101, but also swivel blocks 10H for allowing tilting of a wheel bridge 10 relative to the tractor frame, in this case via a longitudinally in the blocks to be incorporated shaft. Other type of mutual movement allowing support between frame and a wheel bridge may however be applied as well.

Figure 3 represents an example of a wheel bridge with wheels 2 included, as well as an electric motor 17 for a wheel drive 15, and an electric steering unit 18 comprising an electric or hydraulically operating actuator, acting on a shaft articulatingly connecting a wheel and motor base 19 with the bifurcated end section 10E of a wheel support. The wheel and motor base 19 comprises of a base plate 20, here embodied with two inwardly extending lugs 21 to which the connection shafts for support opening 10F connect, and which is supported in connection to the base plate by two angle ties, alternatively denoted support plates 22, which extend transverse to the base plate 19 and under an angle with the lugs 21. In line with such rigid support, the base plate 19 is largely shaped hexagonal, leaving sufficient internal space for attachment to the motor 17, in this embodiment via a bolted flange. The driven motor shaft extends through the base plate 19, and through the rim centre of a wheel 2, so as to connect in earlier described external of the wheel rim included transmission pot, which in turn connects to the wheel rim. In addition to electrical connector 23, the motor, i.e the housing thereof connect to a coolant fluid line connected to an in accordance with preference active cooling system comprising a pump and radiator.

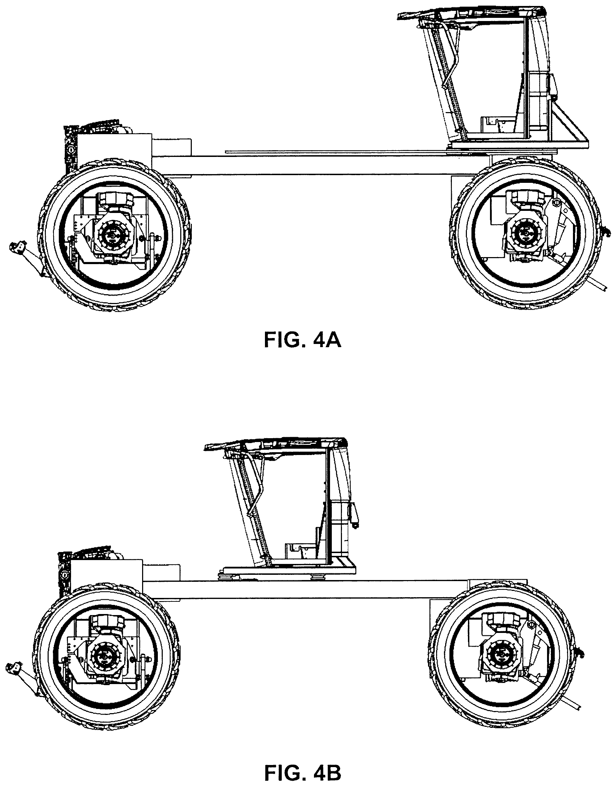

Figures 4A and 4B represent respectively a preferred operating position and a driving position of the drivers cabin 5. The latter is thereto included, at the top side thereof, automatically moveable along the frame 5, the forward direction therein being to the left side of the figures. For entering the cabin, and allowing the latter to be moveable it is provided with a ladder that may be articulated upwards relative to an entry platform for the cabin. In both cases, however especially in the operational case, the cabin is in the present concept or an ergonomically optimal designed tractor located remote from the engine, thereby, in addition to the "work in sight feature, further reducing work stress to the tractor operator.

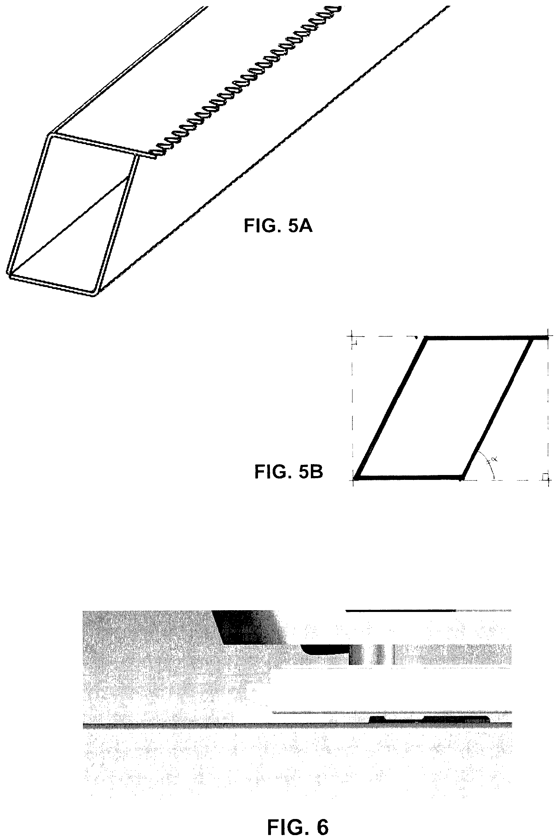

Figure 5A illustrates the shape of a girder 25 as conceived for the frame 5 of the tractor. It is custom made, folded from preferably a single plate section, and is provided with an overhanging rim 26, in which tooth are provided for allowing driven movement of the cabin via a rack and pinion arrangement at at least one girder, the cabin therein glidingly being supported by both of the girders 25 of frame 5.

Figure 5B schematically illustrates a skewed rectangular design of the girder, thus placed under an angle so as to increase structural strength of the girder and so as to promote visibility buy the driver in having main girder sides largely coincide with an angle of diversion of the view of a driver, thereby further optimizing visibility with respect to the crop or soil treatment operation.

Figure 6 illustrates the presence of a sliding frame 27 between cabine 5 and frame 3, allowing ease of change of cabin and accommodation of an effectively the cabin driving cabin drive unit, not depicted in the figures.

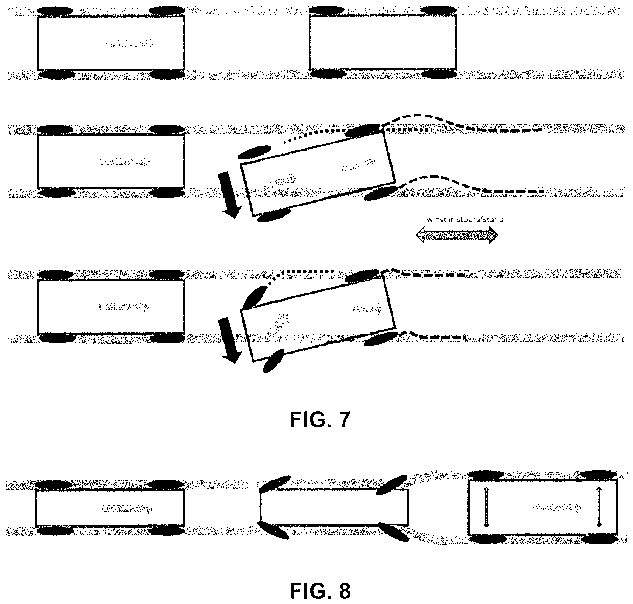

Figure 7 is illustrative of a manner of driving a tractor, e.g. fully or largely automatically by a coordinate system such as GPS, over a virtual lane in a field, or along the track along a bed for crop growth, as may be taken in a desired form from the upper of three lane and tractor situation examples.

The second example provides a situation where the tractor has come of track and where it is steered back to track in a conventional manner, e.g. with the front wheels steering only.

With a tractor design in accordance with the present invention, provided a special steering mode is included and enabled, according to the new design. All four wheels are simultaneously steered into the direction of the desired track position, until the latter is reached, after which the pair of wheel having reach the optimal track position is steered back into the desired track direction. It may be seen from the situation in the second and the third situation illustration in figure 7, that the new manner of steering arrives "back in track postion" earlier than the conventional manner of steering, i.e. enables to correctly process the crop or soil much earlier, i.e. over a greater part, i.e. looses less in track distance, than in the conventional case. The tractor according to the present invention is hence enabled to select between different types of driving modes, which in addition to ordinary road driving, either with or without all four wheels steering, encompasses drive modes for wheel base changing as illustrated by figure 8, and for "quickest back in track steering".

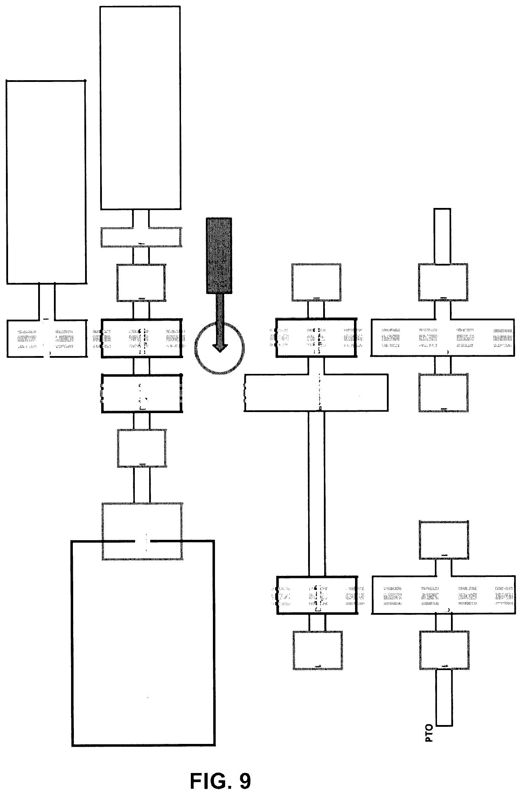

FIG. 9 is a schematic representation of the drive of the generator unit, actually consisting of two generators. In this manner, as described earlier, the electric generators may be individually be maintained small, thus reducing costs thereof, by the fact that hence standard industrial motor may be applied. The generator motors are modified in the same manner as the electric drive motors, i.e. are provided with an actively cooled housing, and are preferably reduced in length as well, in the described manner. Where the rear power take off shaft (PTO-shaft) of the tractor is embodied either hydraulically or preferably electrical, the drive of the PTO shafts associated to a front section hitch is provided mechanical by a driving connection from the drive shaft between engine and generator unit, to an in this embodiment common drive shaft for a front section PTO shaft. The connection, typically of a chain or belt type, may employ a so called Carlyle clutch in such take off from the engine to generator drive. Typically the latter drive will include at least a shaft bearing in front of the power take off to the drive for the two PTO-shafts. In case of an intermediary or final drive shaft for any one of the two PTO-shafts, the drive will be supported by two bearings, one at each side of a driving or driven wheel on such shaft.

## Claims

1. A tractor comprising at least two wheels each included at a lateral side of a tractor frame, the tractor provided with adaptation means for adapting the lateral position of a wheel relative to said frame, a wheel being suspended from the frame by a laterally extendable wheel support system, the support system thereto comprising a first part connected to the frame, and a moveable part connected to a wheel and telescopically moveable relative to said first part, wherein each of said at least two wheels is provided with a separate support system, wherein the moveable parts of the support system are incorporated in the extendable support system one behind the other as taken in longitudinal direction of the tractor frame, in which a drive member for a wheel is arranged pivotable, **characterised in that**
a wheel is suspended by the outer end of the moveable part, the support system comprising a bifurcated end part, the drive member arranged pivotable within the bifurcated end part of the moveable support part.

2. Tractor in accordance with claim 1, in which the dimension of a moveable support part as taken in upward direction is larger than the dimension thereof as taken in the longitudinal direction of the tractor.

3. Tractor in accordance with anyone of claim 1 and 2, wherein a connection between the support system and the tractor frame comprises an upwards extending support, the support at least at the frame side having a longitudinal dimension larger than the combined wheel support system taken in the same direction.

4. Tractor in accordance with any of the preceding claims, adapted for activating an actuator for modifying lateral wheel distance to centre during drive of the tractor, in particular adapted for modifying a wheel direction towards an orientation thereof at an open angle with the support of the wheel, taken in the direction of movement of the latter, in particular simultaneously at four supports of the tractor.

5. Tractor in accordance with any of the preceding claims, in which in the articulated connection between the bifurcated end section and the wheel and drive member therefor, the drive member is embodied by a motor, and the pivot axis of the connection intersects the motor, in particular the drive axis thereof.

6. Tractor in accordance with any of the preceding claims, in which each of the wheels of the tractor is driveable by means of an electric motor, the tractor further comprising a combustion engine driving a generator part for each of said motors, the tractor provided with a power connection between said generator and said motors, the power connection connecting a battery pack for sourcing the electric motors, in which the combustion engine and the generator are supported by a tractor frame part in between the front pair of wheels, and in which the battery pack is supported by and below the level of a frame part in between the rear pair of wheels.

7. Tractor according to any of the preceding claims, in which the front wheel support is moveable within a plane transverse to a plane to be driven on, in particular tiltable about a longitudinally oriented axis, the rear support being connected firmly to the tractor frame.

8. Tractor according to any of the preceding claims, in which the fixed part of each of the two wheels included at opposite sides of a tractor is produced with housing parts common to the support of the other wheel, the common housing part being provided at least to it's upper side, with torsional re-enforcement means, including a shaft and set of shaft receiving blocks and/or including re-enforcement plates extending in the longitudinal direction of the tractor frame, the plates thereby extending at least predominantly normal to a pertaining face of the common housing part, the re-enforcement included at the upper face extending over a length at least matching the common housing dimension as taken in the longitudinal direction of the tractor frame .

9. Tractor according to any of the preceding claims, in which the frame is composed with open space in between two longitudinally extending girders over a largest part of the longitudinal dimension thereof, in particular of an equipment space, in between front and rear wheels of the tractor.

10. Tractor according to claim 5 or claim 6, in which a wheel drive comprises a speed reduction transmission between motor and wheel, composed of a planetary transmission, the transmission included at an outer side of the tractor wheel rim, connected to a wheel motor via shaft extending through a central opening of the wheel, the planetary transmission provided with a transmission pot connected to the wheel rim.

11. Tractor in accordance with any of the preceding claims, in which the vehicle wheel support connects to the wheel via a forked, in particular bifurcated part, to which the wheel support element connects in swiveling manner to the bifurcated support, the support element comprising lugs each connected thereto with an orientation in line with the direction of the bifurcation end part of the vehicle, and each connected to the latter via a swivel pin, said lugs connected to an upper and a lower end the support element, allowing the electric drive motor to extend and swivel within the bifurcation.

12. Tractor in accordance with any of the preceding claims, in which the support element is shaped preferably regularly hexagonal and wherein a lug is supported by a strut included transverse to the support element and with a principal plane oriented in a direction under an angle with said lug, preferably about 45 degrees, more in particular at least largely parallel to one of said six hexagon sides.

13. Tractor in accordance with any of the preceding claims, in which an electric steering unit comprising an electric or hydraulically operating actuator, acts on a shaft articulatingly connecting a wheel- and motor base with the bifurcated end section of a wheel support.

14. Tractor in accordance with the preceding claims, in which the tractor has a pair of front wheels and a pair of rear wheels, each of the wheels being steered.

## Patentansprüche

1. Traktor mit mindestens zwei Rädern, die jeweils an einer lateralen Seite eines Traktorrahmens enthalten sind, wobei der Traktor mit Anpassungsmitteln zum Anpassen der seitlichen Position eines Rades relativ zu dem Rahmen versehen ist, wobei ein Rad durch eine seitlich ausziehbare Radstütze System an dem Rahmen aufgehängt ist, wobei das dazugehörige Trägersystem einen ersten Teil umfasst, der mit dem Rahmen verbunden ist, und einen beweglichen Teil, der mit einem Rad verbunden und gegenüber dem ersten Teil teleskopisch beweglich ist, wobei jedes der mindestens zwei Räder mit einem separaten Trägersystem versehen ist, wobei das bewegliche Teile des Trägersystems in Längsrichtung des Traktorrahmens hintereinander in das ausziehbare Trägersystem eingebaut sind, in dem ein Antriebselement für ein Rad schwenkbar angeordnet ist, **dadurch gekennzeichnet,**
**dass** ein Rad an dem äußeren Ende des beweglichen Teils aufgehängt ist, wobei das Trägersystem ein gegabeltes Endteil umfasst und das Antriebselement schwenkbar in dem gegabelten Endteil des beweglichen Stützteils angeordnet ist.

2. Traktor gemäß Anspruch 1 in wobei die Abmessung eines beweglichen Stützteils in Aufwärtsrichtung größer ist als die Abmessung davon in Längsrichtung des Traktors.

3. Traktor nach einem der Ansprüche 1 und 2, wobei eine Verbindung zwischen dem Trägersystem und dem Traktorrahmen eine nach oben erstreckende Stütze umfasst, wobei die Stütze zumindest an der Rahmenseite eine Längsabmessung aufweist, die größer ist als das aufgenommene kombinierte Radträgersystem die gleiche Richtung.

4. Traktor gemäß einem der vorhergehenden Ansprüche, der zum Aktivieren eines Aktuators zum Ändern des seitlichen Radabstands zur Mitte während des Antriebs des Traktors geeignet ist, insbesondere zum Ändern einer Radrichtung in Richtung einer Ausrichtung davon in einem offenen Winkel mit der Unterstützung des Rades , in Bewegungsrichtung des letzteren genommen, insbesondere gleichzeitig an vier Stützen des Traktors.

5. Traktor gemäß einem der vorhergehenden Ansprüche, bei dem in der Gelenkverbindung zwischen dem gegabelten Endabschnitt und dem Rad und dem Antriebselement dafür das Antriebselement von einem Motor ausgeführt ist und die Schwenkachse der Verbindung den Motor schneidet insbesondere die Antriebsachse davon.

6. Traktor nach einem der vorhergehenden Ansprüche, bei dem jedes der Räder des Traktors mittels eines Elektromotors angetrieben werden kann, wobei der Traktor ferner einen Verbrennungsmotor umfasst, der ein Generatorteil für jeden der Motoren antreibt, wobei der Traktor mit einem versehen ist Stromanschluss zwischen dem Generator und den Motoren, wobei der Stromanschluss ein Batteriepaket zur Beschaffung der Elektromotoren verbindet, bei dem der Verbrennungsmotor und der Generator von einem Traktorrahmenteil zwischen dem vorderen Radpaar getragen werden und bei dem die Batterie Die Packung wird von und unter der Höhe eines Rahmenteils zwischen dem hinteren Radpaar getragen.

7. Traktor nach einem der vorhergehenden Ansprüche, bei dem der Vorderradträger innerhalb einer Ebene quer zu einer zu befahrenden Ebene beweglich ist, insbesondere um eine in Längsrichtung ausgerichtete Achse kippbar, wobei der hintere Träger fest mit dem Traktorrahmen verbunden ist.

8. Traktor nach einem der vorhergehenden Ansprüche, bei dem der feste Teil jedes der beiden Räder, die an gegenüberliegenden Seiten eines Traktors enthalten sind, mit Gehäuseteilen hergestellt ist, die dem Träger des anderen Rads gemeinsam sind, wobei das gemeinsame Gehäuseteil mindestens vorgesehen ist Es ist eine Oberseite mit Torsionsverstärkungsmitteln, einschließlich einer Welle und eines Satzes von Wellenaufnahmeblöcken und / oder einschließlich Verstärkungsplatten, die sich in Längsrichtung des Traktorrahmens erstrecken, wobei sich die Platten dabei zumindest überwiegend normal zu einer entsprechenden Fläche erstrecken des gemeinsamen Gehäuseteils erstreckt sich die Verstärkung an der Oberseite über eine Länge, die mindestens der gemeinsamen Gehäuseabmessung in Längsrichtung des Traktorrahmens entspricht.

9. Traktor nach einem der vorhergehenden Ansprüche, bei dem der Rahmen mit einem offenen Raum zwischen zwei sich in Längsrichtung erstreckenden Trägern über einen größten Teil seiner Längsabmessung davon, insbesondere eines Ausrüstungsraums, zwischen Vorder- und Hinterrädern des Traktors zusammengesetzt ist.

10. Traktor nach Anspruch 5 oder Anspruch6, bei dem ein Radantrieb ein Drehzahlreduzierungsgetriebe zwischen Motor und Rad umfasst, das aus einem Planetengetriebe besteht, wobei das Getriebe an einer Außenseite der Traktorradfelge enthalten ist und über eine Welle, die sich durch eine zentrale Öffnung des Rades erstreckt, mit einem Radmotor verbunden ist Das Planetengetriebe ist mit einem Getriebetopf versehen, der mit der Felge verbunden ist.

11. Traktor nach einem der vorhergehenden Ansprüche, bei dem die Fahrzeugradstütze über ein gegabeltes, insbesondere gegabeltes Teil mit dem Rad verbunden ist, mit dem das Radstützelement schwenkbar mit der gegabelten Stütze verbunden ist, wobei das Stützelement jeweils Laschen umfasst mit einer Ausrichtung in Richtung der Richtung des Bifurkationsendteils des Fahrzeugs, jeweils über einen Drehstift mit diesem verbunden, wobei die Laschen mit einem oberen und einem unteren Ende des Stützelements verbunden sind, wodurch der elektrische Antriebsmotor dies kann innerhalb der Gabelung ausfahren und schwenken.

12. Traktor nach einem der vorhergehenden Ansprüche, bei dem das Stützelement vorzugsweise regelmäßig sechseckig geformt ist und bei dem ein Ansatz oder Strebe von einer Lasche getragen wird, die quer zum Stützelement eingeschlossen ist und deren Hauptebene in einer Richtung unter einem Winkel mit dem Ansatz ausgerichtet ist vorzugsweise etwa 45 Grad, insbesondere zumindest weitgehend parallel zu einer der sechs Sechseckseiten.

13. Traktor nach einem der vorhergehenden Ansprüche, bei dem eine elektrische Lenkeinheit, die einen elektrischen oder hydraulisch betätigenden Aktuator umfasst, auf eine Welle wirkt, die eine Rad- und Motorbasis artikulierend mit dem gegabelten Endabschnitt einer Radstütze verbindet.

14. Traktor gemäß den vorhergehenden Ansprüchen, bei dem der Traktor ein Paar Vorderräder und ein Paar Hinterräder aufweist, wobei jedes der Räder gelenkt wird.

## Revendications

1. Tracteur comprenant au moins deux roues comprises chacune sur un côté latéral d'un châssis de tracteur, le tracteur étant pourvu de moyens d'adaptation pour adapter la position latérale d'une roue par rapport audit châssis, une roue étant suspendue au châssis par un système de support de roue extensible latéralement, le système de support à celui-ci comprenant une première partie connectée au châssis, et une partie mobile connectée à une roue et mobile télescopiquement par rapport à ladite première partie, dans lequel chacune desdites au moins deux roues est pourvue d'un système de support séparé, dans lequel le des parties mobiles du système de support sont incorporées dans le système de support extensible les unes derrière les autres, telles qu'elles sont prises dans la direction longitudinale du châssis du tracteur, dans lequel un élément d'entraînement pour une roue est disposé pivotant,
**caractérisé en ce qu'**une roue est suspendue par l'extrémité extérieure de la partie mobile, le système de support comprenant une partie d'extrémité bifurquée, et l'élément d'entraînement disposé de manière pivotante à l'intérieur de la partie d'extrémité bifurquée de la partie de support mobile.

2. Tracteur selon la revendication 1, dans dont la dimension d'une partie de support mobile prise dans le sens ascendant est plus grande que sa dimension prise dans le sens longitudinal du tracteur.

3. Tracteur selon l'une quelconque des revendications 1 et 2, dans lequel, une connexion entre le système de support et le châssis du tracteur comprend un support s'étendant vers le haut, le support au moins du côté du châssis ayant une dimension longitudinale plus grande que le système de support de roue combiné pris en la même direction.

4. Tracteur selon l'une quelconque des revendications précédentes, adapté pour activer un actionneur pour modifier la distance latérale entre la roue et le centre pendant l'entraînement du tracteur, en particulier adapté pour modifier une direction de roue vers une orientation de celle-ci à un angle ouvert avec le support de la roue , prise dans le sens de déplacement de ce dernier, notamment simultanément au niveau de quatre supports du tracteur.

5. Tracteur selon l'une quelconque des revendications précédentes, dans lequel, dans la liaison articulée entre la section d'extrémité bifurquée et la roue et l'organe d'entraînement pour celle-ci, l'organe d'entraînement est réalisé par un moteur, et l'axe de pivotement de la liaison coupe le moteur, en en particulier son axe d'entraînement.

6. Tracteur selon l'une quelconque des revendications précédentes, dans lequel chacune des roues du tracteur peut être entraînée au moyen d'un moteur électrique, le tracteur comprenant en outre un moteur à combustion entraînant une partie génératrice pour chacun desdits moteurs, le tracteur étant pourvu d'un connexion de puissance entre ledit générateur et lesdits moteurs, la connexion de puissance connectant un bloc-batterie pour alimenter les moteurs électriques, dans lequel le moteur à combustion et le générateur sont supportés par une partie de châssis de tracteur entre la paire de roues avant, et dans laquelle la batterie Le pack est soutenu par et en dessous du niveau d'une partie du cadre entre la paire de roues arrière.

7. Tracteur selon l'une quelconque des revendications précédentes, dans lequel le support de roue avant est mobile dans un plan transversal à un plan d'entraînement, en particulier basculable autour d'un axe orienté longitudinalement, le support arrière étant solidaire du châssis du tracteur.

8. Tracteur selon l'une quelconque des revendications précédentes, dans lequel la partie fixe de chacune des deux roues comprises sur les côtés opposés d'un tracteur est réalisée avec des parties de carter communes au support de l'autre roue, la partie commune de carter étant prévue au moins pour son côté supérieur, avec des moyens de renforcement de torsion, comprenant un arbre et un ensemble de blocs de réception d'arbre et / ou comprenant des plaques de renforcement s'étendant dans la direction longitudinale du châssis du tracteur, les plaques s'étendant ainsi au moins majoritairement perpendiculairement à une face correspondante de la partie de boîtier commune, le renforcement inclus au niveau de la face supérieure s'étendant sur une longueur au moins correspondant à la dimension commune de boîtier prise dans la direction longitudinale du châssis du tracteur.

9. Tracteur selon l'une quelconque des revendications précédentes, dans lequel le châssis est composé d'un espace ouvert entre deux poutres s'étendant longitudinalement sur une plus grande partie de sa dimension longitudinale, en particulier d'un espace d'équipement, entre les roues avant et arrière du tracteur .

10. Tracteur selon la revendication 5 ou la revendication6, dans laquelle une transmission de roue comprend une transmission de réduction de vitesse entre le moteur et la roue, composée d'une transmission planétaire, la transmission comprise sur un côté extérieur de la jante de roue du tracteur, reliée à un moteur de roue via un arbre s'étendant à travers une ouverture centrale de la roue, la transmission planétaire munie d'un pot de transmission relié à la jante de roue.

11. Tracteur selon l'une quelconque des revendications précédentes, dans lequel le support de roue du véhicule se connecte à la roue via une partie fourchue, en particulier bifurquée, à laquelle l'élément de support de roue se connecte de manière pivotante au support bifurqué, l'élément de support comprenant chacun des pattes reliés à celui-ci avec une orientation dans le prolongement de la direction de la partie d'extrémité de bifurcation du véhicule, et reliés chacun à ce dernier par l'intermédiaire d'un axe pivotant, lesdites pattes étant reliées à une extrémité supérieure et une extrémité inférieure de l'élément de support, permettant au moteur électrique de s'étendre et pivoter dans la bifurcation.

12. Tracteur selon l'une quelconque des revendications précédentes, dans lequel l'élément de support a une forme de préférence régulièrement hexagonale et dans lequel une patte est supportée par une entretoise comprise transversalement à l'élément de support et avec un plan principal orienté dans une direction sous un angle avec ladite patte , de préférence environ 45 degrés, plus particulièrement au moins largement parallèle à l'un desdits six côtés hexagonaux.

13. Tracteur selon l'une quelconque des revendications précédentes, dans lequel une unité de direction électrique comprenant un actionneur à commande électrique ou hydraulique, agit sur un arbre reliant de manière articulée une base de roue et de moteur à la section d'extrémité bifurquée d'un support de roue.

14. Tracteur selon les revendications précédentes, dans lequel le tracteur a une paire de roues avant et une paire de roues arrière, chacune des roues étant dirigée.
